# EUROPÄISCHE PATENTSCHRIFT

(11) **EP 2 445 728 B1**
(45) Veröffentlichungstag und Bekanntmachung des Hinweises auf die Patenterteilung: **24.07.2013**
(21) Anmeldenummer: 10739845.5
(22) Anmeldetag: 14.06.2010
(51) Int. Cl.: B44B 5/00

(54) **VERFAHREN ZUM KENNZEICHNEN VON GEGENSTÄNDEN MITTELS CODES IN FORM VON MIKRO- UND/ODER NANOGROßEN STRUKTUREN**
METHOD FOR MARKING OBJECTS BY MEANS OF CODES IN THE FORM OF MICRO- AND/OR NANO-SIZED STRUCTURES
PROCÉDÉ POUR CARACTÉRISER DES OBJETS AU MOYEN DE CODES SE PRÉSENTANT SOUS LA FORME DE MICROSTRUCTURES ET/OU DE NANOSTRUCTURES

(30) Priorität: 25.06.2009 EP 09009362; 25.06.2009 DE 102009038108; 05.10.2009 DE 102009048200
(43) Veröffentlichungstag der Anmeldung: 02.05.2012
(73) Patentinhaber: BPE e. K., 90542 Eckental (DE)
(72) Erfinder: HORNIG, Wolfgang, 90542 Eckental (DE)
(74) Vertreter: Kaufmann, Sigfrid
(86) Internationale Anmeldenummer: PCT/DE2010/075051
(87) Internationale Veröffentlichungsnummer: WO 2010/149155

(56) Entgegenhaltungen:
- EP-A2- 0 360 337
- WO-A2-2007/095501
- DE-A1- 19 930 272
- DE-A1-102006 008 464
- DE-A1-102007 020 624

## Beschreibung

Die Erfindung betrifft ein Verfahren, mit dem Gegenstände unkompliziert mittels Codes in Form von unter- oder oberständigen Strukturen gekennzeichnet werden können. Das Verfahren eignet sich besonders zur Erzeugung fälschungssicherer, firmeneigener Codes auf sicherheitsrelevanten (z. B. Fahrzeugteilen), hochqualitativen (z. B. Uhren, Textilien) und wertbehafteten (z. B. Banknoten) Gegenständen sowie auf Ausweisen (z.B. Reisepässen, Personalausweisen oder Kreditkarten).

Aufgrund der technischen Entwicklung vor allem auf den Gebieten der Drucktechnik und der Materialbearbeitung können viele altbekannte Methoden zum Kennzeichnen von Gegenständen, wie z.B. Wasserzeichen sowie gedruckte oder eingeprägte Markenzeichen, vergleichsweise einfach nachgeahmt werden. Aus dem Stand der Technik sind deshalb zahlreiche neue Methoden bekannt, die ein nahezu fälschungssicheres Kennzeichnen von Gegenständen ermöglichen.

So wird in der WO 03/038000 A1 eine wässrige Markierungslösung mit einzelsträngigen Nukleinsäuren oder deren Derivaten sowie Glycerin und Polyethylenglykol gezeigt, die unkompliziert, z.B. mittels eines Stempels, auf die Oberflächen der zu markierenden Gegenstände aufgetragen werden kann.

Mit der Markierungslösung ist zwar eine hohe Fälschungssicherheit erreichbar, das Verfahren ist jedoch auf Gegenstände mit saugenden Oberflächen (z.B. Papier) beschränkt. Die Herstellung der Nukleinsäuren/Nukleinsäurederivate und deren Prüfung sind außerdem aufwendig und kostenintensiv.

In DE 195 18 086 A1 wird vorgeschlagen, flächenhafte Gebilde, wie z.B. Banknoten, Wertpapiere, Kreditkarten oder Ausweispapiere zum Schutz vor Fälschungen mittels Verbindungen, die paramagnetische Ionen, freie Radikale oder seltene Kernisotope in deutlich erhöhter Häufigkeit enthalten, sowie mittels Verbindungen, die freie Radikale bilden, zu markieren.

In WO 03/071478 A1 wird ein Verfahren zum fälschungssicheren Kennzeichnen von Gegenständen mittels Strichcodes oder Schriftcodes vorgestellt, bei der direkt auf den Gegenständen oder auf einem Trägermaterial mindestens zwei Codes, die sich zumindest teilweise überlappen und die unterschiedliche Polarisationseigenschaften aufweisen, aufgebracht werden. Die Auswertung der Codes erfolgt mittels eines mit entsprechenden Polarisationsfiltern ausgestatteten Lesesystems.

Mit beiden vorgenannten Lösungen können zwar Codes mit erhöhter Fälschungssicherheit erzeugt werden, die Lösungen sind jedoch auf flächige Gegenstände beschränkt, deren Oberflächen keinen allzu großen mechanischen Belastungen (Abrieb) ausgesetzt sind. Zudem ist die Herstellung der Markierungen relativ aufwendig.

DE 102 12 233 A1 zeigt ein Verfahren zum Herstellen von fälschungssicheren Signierfäden, bei dem die Signierfäden mittels einer programmgesteuerten Mediendüse mit einem Signiermedium beschichtet werden. Das Verfahren ist jedoch weitgehend auf das Kennzeichnen von Textilien beschränkt. Darüber hinaus ist auch das Herstellen der Signierfäden vergleichsweise aufwendig.

Des Weiteren wird in DE 199 30 272 C2 ein Verfahren zur fälschungssicheren Kennzeichnung von Werkstücken, insbesondere tiefziehfähigen Blechen, beschrieben, bei dem ein nadelartiges Werkzeug, das zur Erzeugung von Codes in Form sichtbarer Eindrücke dient, auf die Oberfläche gepresst und anschließend auf dieser verschoben wird.

Bei den beiden letzten Lösungen ist allerdings das Kennzeichnen der Gegenstände vergleichsweise zeitaufwendig; infolgedessen sind sie für ein kostengünstiges Aufbringen von Codes auf Gegenständen, wie z.B. Massenartikeln, ungeeignet.

Zudem sind für die immer mehr an Bedeutung gewinnenden Produkte der Mikro- oder Nanotechnik (aufgrund ihrer geringen Abmessungen) praktisch keine Methoden zur Kennzeichnung bekannt, mit denen sie zum Schutz vor Produktpiraterie oder mit denen sie zur Qualitätssicherung, insbesondere entsprechend dem Produktionsverfahren (z.B. Mikrosystemtechnik, Mikroelektronik, Nanobeschichtungstechnik oder Medizintechnik) gekennzeichnet werden können.

Der Erfindung liegt die Aufgabe zugrunde, ein Verfahren zu finden, mit dem beliebige Gegenstände, insbesondere Massenartikel, unkompliziert und kostengünstig mit fälschungssicheren Codes in Form von unter- oder oberständigen Nano- oder Mikrostrukturen versehen werden können. Das Verfahren soll auch die Kennzeichnung von Produkten der Mikro- und Nanotechnik ermöglichen.

Die Aufgabe der Erfindung wird durch die Merkmale des Anspruchs 1 gelöst. Weitere vorteilhafte Ausführungen und Verwendungen der Erfindung ergeben sich aus den Ansprüchen 2 bis 16.

Nach Maßgabe der Erfindung wird der Code in Form von mikro- und/oder nanogroßen Strukturen dadurch auf die zu kennzeichnenden Gegenstände aufgebracht, dass das aus Diamant, Hartmetall, Glas oder Keramik bestehende Ende zumindest eines Prägewerkzeugs, das als Spitze oder als scharfe Kante geformt ist oder das definierte Radien aufweist, unter Verwendung einer Positioniereinrichtung mehrfach auf verschiedene Stellen der Oberfläche entweder des zu kennzeichnenden Gegenstandes oder auf verschiedene Stellen der Oberfläche eines Werkzeugs oder mindestens eines Werkzeugeinsatzes, der zusammen mit einer Halterung zu einem Werkzeug kombinierbar ist, gepresst wird. Auf diese Weise werden an allen Aufpressstellen, entweder auf dem zu kennzeichnenden Gegenstand oder auf dem Werkzeug/dem Werkzeugeinsatz, mit dem später die Gegenstände hergestellt und gleichzeitig signiert werden, Vertiefungen eingeprägt.

Als Positioniereinrichtung werden Mikro- oder Nanohärteprüfgeräte eingesetzt, da diese einerseits vergleichsweise kostengünstig erhältlich sind und andererseits vorgegebene Positionen sehr genau anfahren können.

Das direkte Einprägen der kennzeichnenden Codes ist vor allem für hochpreisige Produkte mit vergleichsweise geringen Stückzahlen geeignet. Da die entsprechend programmierten Härteprüfgeräte alle Aufpressstellen, deren Summe den charakteristischen Code bildet, automatisch anfahren können, ist die Kennzeichnung der Gegenstände mit einem relativ geringen Aufwand verbunden.

Für Massenartikel, ist vorgesehen, in einem ersten Schritt die ein- oder mehrteiligen (im Falle der Verwendung eines Werkzeugeinsatzes) Werkzeuge in einem ersten Schritt mit dem Code zu versehen und in einem zweiten Schritt mittels der präparierten Werkzeuge den Code (direkt oder mit einem Zwischenschritt) auf die zu kennzeichnenden Gegenstände zu übertragen.

Sofern ein Werkzeugeinsatz verwendet wird, wird dieser nach dem Einprägen des Codes mit einer geeigneten Halterung verbunden; beide zusammen bilden dann das Werkzeug. Durch die Verwendung eines Werkzeugeinsatzes ist es möglich, schnell zwischen verschiedenen Codes zu wechseln.

Es hat sich überraschenderweise gezeigt, dass sich Nanomaterialien, die üblicherweise eine größere Härte aufweisen als die entsprechenden Ausgangsmaterialien, besser für das Einprägen von Vertiefungen eignen, als deren Ausgangsmaterialien. Dies äußert sich einerseits darin, dass z.B. Spitzen beim Prägen, ohne dass sich dabei Risse im Material bilden, mit wesentlich höheren Kräften aufgedrückt werden können als auf die entsprechenden Ausgangsmaterialien, andererseits wird auch die Form der Spitze besser abgebildet. So konnten beim Aufpressen einer nadelförmigen Spitze auf einen Gegenstand aus hartem, grobkörnigen Material bereits bei Aufpresskräften von ca. 10g (Gewichtskraft) Risse im Bereich der Aufpressstelle festgestellt werden, wohingegen sich bei hartem, feinkörnigem Material auch bei Kräften größer 100g keine Risse bildeten.

In einer vorteilhaften Ausführungsform wird deshalb ein Werkzeug bzw. ein Werkzeugeinsatz verwendet, der aus einem Nanometall, wie z.B. Nanonickel, Nanostahl oder Nanoaluminium, einem Nanohartmetall oder einer Nanokeramik, wie z.B. Nanoaluminiumoxid, Nanozirkonoxid oder Nanotitanoxid, besteht.

In diesem Zusammenhang sind unter Nanometallen, Metalle oder Legierungen, deren Gefüge Korngrössen kleiner als 1µm aufweist, und/oder Metalle/Legierungen mit zulegierten ungelösten Nanoteilchen zu verstehen. Nanohartmetall hat eine analoge Bedeutung, wobei jedoch anstelle der Metalle/Legierungen Hartmetalle, wie z.B. hochlegierte Stähle oder Wolframcarbid/Kobalt treten. Entsprechend sind Nanokeramiken keramische Werkstoffe mit einem Gefüge, in dem Korngrössen kleiner als 1µm auftreten, oder keramische Werkstoffe, die anteilig mit zugemischten, ungelösten Nanoteilchen (kleiner 1µm) versetzt sind.

Unter Nanobeschichtungen werden Beschichtungen von Oberflächen mit Werkstoffen verstanden, in denen Korngrössen kleiner 1µm auftreten und/oder die zulegierte ungelöste Nanoteilchen enthalten und /oder deren Dicke kleiner als 1µm dick ist.

Des Weiteren wurde überraschend festgestellt, dass auch in sehr harte und spröde Materialien wie Diamant, Glas oder Quarzglas Vertiefungen (bis zu einer bestimmten Tiefe) eingeprägt werden können, ohne dass sich dabei Risse in den Materialien ausbilden. Besonders interessant ist der Fall des Prägens von Diamant mit einer Diamantnadel: hier fällt auf, dass, obwohl die Härten vom prägenden und zu prägenden Stoff gleich groß sind, dennoch mit einer Diamantnadel viele Prägungen erzeugt werden können, d.h., der Verschleiß der Diamantnadel ist wesentlich geringer als eigentlich zu erwarten wäre. Entsprechend werden in einer alternativen Ausführungsform, Werkzeuge aus Diamant, Glas oder Quarzglas verwendet.

Werden zum Prägen der Vertiefungen Standardprägewerkzeuge eingesetzt, so wird die Fälschungssicherheit der Codes über die charakteristische Anordnung der Vertiefungen erreicht. Bevorzugt werden sehr feine Codes erzeugt, die mit dem bloßen Auge nicht zu erkennen sind. Zur weiteren Erhöhung der Fälschungssicherheit können auch Prägewerkzeuge mit Spitzen, definierten Radien oder scharfen Kanten eingesetzt werden, die eine charakteristische Form und/oder Oberflächenstruktur aufweisen, wodurch eine Identifizierung aller mit dieser Spitze erzeugten Vertiefungen ermöglicht wird.

Im einfachsten Fall wird ein Werkzeug mit unterständigen Strukturen hergestellt und dieses anschließend als Werkzeug eingesetzt. Um ein automatisches Einprägen des Codes zu ermöglichen, wird dieser bevorzugt in vorhandene Produktionswerkzeuge eingebracht; auf den Produkten werden dann, ohne zusätzlichen Bearbeitungsschritt, oberständige Strukturen erzeugt.

Produktionswerkzeuge, die mit einer Mikro- und/oder Nanostruktur versehen werden, sind beispielsweise Spritzgussformen, Tiefzieh-, Press-, Stanz-, Schmiede oder Extrudierwerkzeuge. Für die Herstellung von Produkten der Mikro- und Nanotechnik sind entsprechend Mikrowerkzeuge derselben Art vorgesehen. Zur Kennzeichnung von Textilien können Spinn-, Web- oder Wickelwerkzeuge mit Mikro- und/oder Nanostrukturen eingesetzt werden.

Es ist auch denkbar, mit dem erfindungsgemäßen Verfahren Spritzgussformen, Tiefzieh-, Press-, Stanz-, Schmiede- oder Extrudierwerkzeugen für die Fertigung von Produkten der Mikro- oder Nanotechnik herzustellen, indem die Formen bzw. Werkzeuge ausschließlich mittels Aufbringens von einem oder mehreren Codes hergestellt oder deren Oberflächen mittels Aufbringens von einem oder mehreren Codes strukturiert werden.

Der Vorteil des Aufbringens einer Mikro- und/oder Nanostruktur direkt auf dem Produktionswerkzeug besteht darin, dass kein zusätzlicher Schritt in einen schon vorhanden Produktionsprozess eingefügt werden muss; die vorhandenen Maschinen können beibehalten werden, lediglich das eigentliche Werkzeug in der Maschine muss mit einem Code versehen werden.

Oberständige Codes auf Gegenständen bzw. Produkten haben allerdings den Nachteil, dass sie, insbesondere unter dem Einfluss von mechanischen Belastungen (Abrieb), nicht sehr beständig sind. Um die zu kennzeichnenden Gegenstände mit unterständigen Codes, die wesentlich abriebfester als oberständige Codes sind, zu versehen, ist es vorgesehen, einen Zwischenschritt einzufügen, in dem mit Hilfe der ursprünglich erzeugten Werkzeuge (mit unterständigen Strukturen), weitere Werkzeuge oder Werkzeugeinsätze (z.B. durch Aufeinanderpressen) mit oberständigen Strukturen versehen werden. Die Werkzeuge mit den oberständigen Strukturen werden ihrerseits auf die zu kennzeichnenden Gegenstände gepresst, sodass auf diesen unterständige Strukturen erzeugt werden.

Entsprechend ist es auch möglich, zuerst ein Urwerkzeug mit unterständigen Strukturen herzustellen und mit diesem Produktionswerkzeuge mit oberständigen Strukturen zu fertigen, mittels derer dann Gegenstände hergestellt werden, die bei der Herstellung automatisch unterständige Codes erhalten.

Ein interessanter Anwendungsfall ist die Kennzeichnung von Textilien oder von Papier. Zur Erzeugung der Codes werden entweder Vertiefungen in die einzelnen Fäden/Fasern eingeprägt oder es werden in definierter Weise einzelne (feine) Fäden/Fasern durchgetrennt.

Das Kennzeichnen von Stoffen durch Einprägen von Vertiefungen hat den Vorteil, dass es völlig zerstörungsfrei ist. Da die in Textilien Stoffe eingeprägte Vertiefungen nach mehreren Waschvorgängen möglicherweise nicht mehr nachweisbar sind, eignet sich das Verfahren insbesondere zur Kennzeichnung von unverarbeiteten, textilen Stoffen (Stoffballen).

Codes, bei denen einzelne Fäden von Textilien durchtrennt werden, sind zwar nicht zerstörungsfrei, können jedoch auch problemlos zum Kennzeichnen von verarbeiteten textilen Stoffen, also von Kleidungsstücken eingesetzt werden, da sie nicht durch Reinigungs- oder Waschvorgänge unkenntlich gemacht werden können. Sofern, was mit dem Verfahren ohne Weiteres möglich ist, nur sehr feine Fäden durchgetrennt und die Abstände zwischen den durchtrennten Fäden groß gewählt werden, wird die mechanische Belastbarkeit der Textilien an der Stelle des aufgebrachten Codes praktisch nicht beeinträchtigt.

Dem Wesen der Erfindung folgend werden die Codes entweder auf den Textilien direkt aufgebracht oder es werden wie oben beschrieben Spinn-, Web- oder Wickelwerkzeugen mit oberständigen Strukturen hergestellt, die bei der Verarbeitung der Textilien Codes einprägen und/oder durch ein Durchtrennen einzelner Fäden Codes auf den zu kennzeichnenden Textilien erzeugen.

Denkbar ist es auch, zunächst ein Werkzeug aus einem optischen Material, wie z.B. Glas, Quarzglas oder transparentem Kunststoff, herzustellen, und dieses anschließend zum Erzeugen der Codes auf den Gegenständen mittels eines Lasers einzusetzen.

Für die schnelle und sichere Identifizierung von mit dem erfindungsgemäßen Verfahren gekennzeichneten Gegenständen im Rahmen der Qualitätssicherung oder der Echtheitsüberprüfung bieten sich hochwertige optische Mikroskope oder Lesegeräte, wie z.B. Scanner oder Bar-Code-Leser, an.

Das erfindungsgemäße Verfahren zeichnet sich also durch niedrige Investitionskosten und, da es sowohl in einer laufenden Fertigung als auch zur individuellen Kennzeichnung von Einzelstücken eingesetzt werden kann, durch eine flexiblen Anwendung aus. Das Verfahren kann, da mikro- oder nanogroßen Codes erzeugt werden, besonders vorteilhaft auf Mikrobauteile (mit sehr geringen Abmessungen), wie dünne Folien, Beschichtungen (Lacke, CVD, PVD) sowie Halbzeuge (Bänder, Rohre, Bleche, Draht, Profile) aus verschiedenen Materialien (Metall, Kunststoff, Glas, Keramik) angewendet werden.

## Patentansprüche

1. Verfahren zum Kennzeichnen von Gegenständen mittels Codes in Form von mikro- und/oder nanogroßen Strukturen auf Gegenstände, wobei entweder das aus Diamant, Hartmetall, Glas oder Keramik bestehende Ende zumindest eines Prägewerkzeugs, das als Spitze oder als scharfe Kante geformt ist oder das definierte Radien aufweist, zum direkten Aufbringen des Codes mehrfach auf verschiedene Stellen der Oberfläche des zu kennzeichnenden Gegenstandes oder in einem ersten Schritt auf verschiedene Stellen der Oberfläche eines Werkzeugs oder mindestens eines Werkzeugeinsatzes, der zusammen mit einer Halterung zu einem Werkzeug kombinierbar ist, gepresst wird, wodurch an allen Aufpressstellen Vertiefungen eingeprägt werden, und in einem zweiten Schritt mittels des hergestellten ein- bzw. mehrteiligen Werkzeugs die zu kennzeichnenden Gegenstände mit den Codes versehen werden, **dadurch gekennzeichnet**, daβ dies unter Verwendung eines Mikro- oder Nanohärteprüfgeräts geschieht.

2. Verfahren nach Anspruch 1, **dadurch gekennzeichnet, dass** ein Werkzeug bzw. ein Werkzeugeinsatz aus einem Nanometall oder einem Nanohartmetall verwendet wird.

3. Verfahren nach Anspruch 1, **dadurch gekennzeichnet, dass** ein Werkzeug bzw. ein Werkzeugeinsatz aus einer Nanokeramik verwendet wird.

4. Verfahren nach Anspruch 3, **dadurch gekennzeichnet, dass** ein Werkzeug bzw. ein Werkzeugeinsatz aus Nanoaluminiumoxid, Nanozirkondioxid oder Nanotitandioxid verwendet wird.

5. Verfahren nach Anspruch 1, **dadurch gekennzeichnet, dass** ein Werkzeug aus Diamant, Glas oder Quarzglas verwendet wird.

6. Verfahren nach Anspruch 1 bis 5, **dadurch gekennzeichnet, dass** ein Werkzeug bzw. ein Werkzeugeinsatz mit einer Beschichtung aus Nanomaterialien verwendet wird.

7. Verfahren nach Anspruch 1 bis 6, **dadurch gekennzeichnet, dass** zumindest ein Prägewerkzeug mit einer Spitze mit einer Form und/oder Oberflächenstruktur eingesetzt wird, die eine Identifizierung aller mit dieser Spitze erzeugten Vertiefungen ermöglicht.

8. Verfahren nach Anspruch 1 bis 7, **dadurch gekennzeichnet, dass** ein Werkzeug mit unterständigen Strukturen hergestellt und anschließend auf die zu kennzeichnenden Gegenständen gepresst wird, wodurch auf den Gegenständen oberständige Strukturen erzeugt werden.

9. Verfahren nach Anspruch 8, **dadurch gekennzeichnet, dass** als Werkzeug ein bereits vorhandenes Produktionswerkzeug verwendet wird und auf diesem unterständige Strukturen erzeugt werden.

10. Verfahren nach Anspruch 1 bis 9, **dadurch gekennzeichnet, dass** ein Werkzeug mit unterständigen Strukturen hergestellt wird, mit ihm weitere Werkzeuge oder Werkzeugeinsätze mit oberständigen Strukturen erzeugt werden, und die Werkzeuge mit oberständigen Strukturen auf die zu kennzeichnenden Gegenständen gepresst werden, wodurch auf den zu kennzeichnenden Gegenständen unterständige Strukturen erzeugt werden.

11. Verfahren nach Anspruch 10, **dadurch gekennzeichnet, dass** zunächst ein Urwerkzeug mit unterständigen Strukturen hergestellt wird und mit diesem Produktionswerkzeuge mit oberständigen Strukturen gefertigt werden, die zur Erzeugung von Codes in Form von unterständigen Strukturen auf den zu kennzeichnenden Gegenständen verwendet werden.

12. Verwendung des Verfahrens nach Anspruch 1 zur Herstellung von mit Codes versehenen Spritzgussformen, Tiefzieh-, Press-, Stanz-, Schmiede-, Walz- oder Extrudierwerkzeuge für die Herstellung von Produkten der Mikro- oder Nanotechnik.

13. Verwendung des Verfahrens nach Anspruch 1 zur Herstellung von Spritzgussformen, Tiefzieh-, Press-, Stanz-, Schmiede- oder Extrudierwerkzeugen für die Herstellung von Produkten der Mikro- oder Nanotechnik, dergestalt, dass die Formen bzw. Werkzeuge ausschließlich mittels Aufbringens von einem oder mehreren Codes hergestellt oder deren Oberflächen mittels Aufbringens von einem oder mehreren Codes strukturiert werden.

14. Verwendung des Verfahrens nach Anspruch 1 zum Kennzeichnen von Textilien, wobei Vertiefungen in die einzelnen Fasern eingeprägt und/oder in Form eines signifikanten Musters einzelne Fäden durchgetrennt werden.

15. Verwendung des Verfahrens nach Anspruch 1 zur Herstellung von mit Codes versehenen Spinn-, Web- oder Wickelwerkzeugen, die bei der Verarbeitung der Textilien Codes einprägen und/oder Codes mittels Durchtrennens einzelner Fäden auf Textilien erzeugen.

## Claims

1. A method for marking objects by means of codes in the form of microsize and nanosize structures on objects, wherein either the end consisting of diamond, hard metal, glass or ceramic of at least one stamping die, which is formed as a tip or as a sharp edge or which has defined radii, for direct application of the code is pressed a number of times onto different locations of the surface of the object to be marked or, in a first step, is pressed onto various locations of the surface of a die or of at least one die insert, which can be combined together with a holder to form a die, whereby indentations are impressed at all pressed locations, and, in a second step, the objects to be marked are provided with the codes by means of the produced one-part or multi-part die, **characterised in that** this occurs with use of a micro hardness tester or nano hardness tester

2. The method according to Claim 1, **characterised in that** a die or a die insert formed from a nano metal or a nano hard metal is used.

3. The method according to Claim 1, **characterised in that** a die or a die insert formed from a nano ceramic is used.

4. The method according to Claim 3, **characterised in that** a die or a die insert formed from nano aluminium oxide, nano zirconium dioxide or nano titanium dioxide is used.

5. The method according to Claim 1, **characterised in that** a die formed from diamond, glass or quartz glass is used.

6. The method according to Claim 1 to 5, **characterised in that** a die or a die insert with a coating formed from nano materials is used.

7. The method according to Claim 1 to 6, **characterised in that** at least one stamping die with a tip having a shape and/or surface structure enabling identification of all indentations produced by means of said tip is used.

8. The method according to Claim 1 to 7, **characterised in that** a die with downwardly protruding structures is produced and is then pressed onto the objects to be marked, whereby upwardly protruding structures are produced on the objects.

9. The method according to Claim 8, **characterised in that** a production die already provided is used as a die and downwardly protruding structures are produced thereon.

10. The method according to Claim 1 to 9, **characterised in that** a die with downwardly protruding structures is produced, with which further dies or die inserts with upwardly protruding structures are produced, and the dies with upwardly protruding structures are pressed onto the objects to be marked, whereby downwardly protruding structures are produced on the objects to be marked.

11. The method according to Claim 10, **characterised in that** a prototype die with downwardly protruding structures is produced and is used to make production dies having upwardly protruding structures, which are used to produce codes in the form of downwardly protruding structures on the objects to be marked.

12. Use of the method according to Claim 1 for producing injection moulds, deep-drawing dies, pressing dies, punching dies, forging dies, rolling dies or extrusion dies provided with codes for producing microtechnology or nanotechnology products.

13. Use of the method according to Claim 1 for producing injection moulds, deep-drawing dies, pressing dies, punching dies, forging dies or extrusion dies for producing microtechnology or nanotechnology products, in such a way that the moulds or dies are produced exclusively by means of application of one or more codes or the surfaces of said moulds or dies are structured by means of application of one or more codes.

14. Use of the method according to Claim 1 for marking textiles, wherein indentations are impressed into the individual fibres and/or individual yarns are separated in the form of a significant pattern.

15. Use of the method according to Claim 1 for producing spinning, weaving or winding dies, which impress the textile code during processing and/or produce codes on textiles by separating individual yarns.

## Revendications

1. Procédé pour le marquage d'objets au moyen de codes, sous la forme de micro- et/ou de nanostructures sur des objets, dans lequel l'extrémité constituée soit de diamant, de métal dur, de verre ou de céramique d'au moins un outil d'estampage formé comme une pointe ou comme une arête vive ou comportant des rayons définis, est pressée plusieurs fois à différents endroits de la surface de l'objet à marquer, ou, dans une première étape, à différents endroits de la surface d'un outil ou d'au moins un insert d'outil susceptible d'être combiné en un outil en association avec un support, en vue de l'application directe du code, des renfoncements étant ainsi estampés en tous les points de pressage, et dans lequel, dans une deuxième étape, les objets à marquer sont dotés de codes au moyen de l'outil fabriqué en une ou plusieurs pièces, **caractérisé en ce que** cela est réalisé à l'aide d'un micro ou nano duromètre.

2. Procédé selon la revendication 1, **caractérisé en ce qu'**il est prévu un outil ou un insert d'outil constitué d'un nano-métal ou d'un nano-métal dur.

3. Procédé selon la revendication 1, **caractérisé en ce qu'**il est prévu un outil ou un insert d'outil constitué de nano-céramique.

4. Procédé selon la revendication 3, **caractérisé en ce qu'**il est prévu un outil ou un insert d'outil constitué de nano-oxyde d'aluminium, de nano-dioxyde de zirconium ou de nano-dioxyde de titane.

5. Procédé selon la revendication 1, **caractérisé en ce qu'**il est prévu un outil constitué de diamant, de verre ou de verre de quartz.

6. Procédé selon l'une des revendications 1 à 5, **caractérisé en ce qu'**il est prévu un outil ou un insert d'outil avec un revêtement de nanomatériaux.

7. Procédé selon l'une des revendications 1 à 6, **caractérisé en ce qu'**il est prévu au moins un outil d'estampage avec une pointe présentant une forme et/ou une structure de surface permettant d'identifier tous les renfoncements réalisés avec cette pointe.

8. Procédé selon l'une des revendications 1 à 7, **caractérisé en ce qu'**un outil avec des structures renfoncées est fabriqué puis pressé sur les objets à marquer, produisant ainsi des structures saillantes sur les objets.

9. Procédé selon la revendication 8, **caractérisé en ce que** l'outil utilisé est un outil de production préexistant, et **en ce que** des structures renfoncées sont réalisées sur celui-ci.

10. Procédé selon l'une des revendications 1 à 9, **caractérisé en ce qu'**un outil avec des structures renfoncées est fabriqué, d'autres outils ou inserts d'outil avec des structures saillantes sont également fabriqués avec celui-ci, et les outils avec des structures saillantes sont pressés sur les objets à marquer, des structures renfoncées étant ainsi réalisées sur les objets à marquer.

11. Procédé selon la revendication 10, **caractérisé en ce qu'**un outil de base avec des structures renfoncées est tout d'abord fabriqué, puis des outils de production avec des structures saillantes sont fabriqués à l'aide de celui-ci et utilisés pour produire des codes sous la forme de structures renfoncées sur les objets à marquer.

12. Mise en oeuvre du procédé selon la revendication 1, pour la fabrication de moules d'injection et d'outils d'emboutissage, de pressage, de poinçonnage, de forge, de laminage ou d'extrusion, pourvus de codes, pour la fabrication de produits de la micro ou nanotechnique.

13. Mise en oeuvre du procédé selon la revendication 1, pour la fabrication de moules d'injection et d'outils d'emboutissage, de pressage, de poinçonnage, de forge ou d'extrusion, pour la fabrication de produits de la micro ou nanotechnique, de telle sorte que les formes ou les outils sont fabriqués exclusivement par application d'un ou de plusieurs codes, ou que leurs surfaces sont structurées par application d'un ou de plusieurs codes.

14. Mise en oeuvre du procédé selon la revendication 1, pour le marquage de tissus, où des renfoncements sont pressés dans les différentes fibres et/ou certains fils sont coupés en formant un motif significatif.

15. Mise en oeuvre du procédé selon la revendication 1, pour la fabrication d'outils de filage, de tissage ou de bobinage pourvus de codes, pressant des codes et/ou produisant des codes sur des textiles en coupant des fils individuels pendant le traitement des textiles.
